# EUROPEAN PATENT APPLICATION

(11) **EP 4 224 114 A1**
(43) Date of publication of application: **09.08.2023**
(21) Application number: 22217055.7
(22) Date of filing: 29.12.2022
(51) Int. Cl.: G01C 15/00, G01S 1/00, G01C 7/06

(54) **LASER SCANNING DATA PROCESSING DEVICE, LASER SCANNING METHOD, AND PROGRAM**

(30) Priority: 27.01.2022 JP 2022010894
(71) Applicant: TOPCON CORPORATION, Tokyo 174-8580 (JP)
(72) Inventor: SASAKI, You, Tokyo, 174-8580 (JP)
(74) Representative: Eisenführ Speiser

(57) **Abstract**

Laser scanning is performed along a transverse section of a tunnel while the amount of scanning is reduced as much as possible. A laser scanning apparatus includes a horizontal rotation unit, a vertical rotation unit disposed on the horizontal rotation unit, and an optical unit disposed on the vertical rotation unit and configured to emit and receive laser scanning light. A method includes obtaining laser scanning data of right and left wall surfaces of a tunnel, calculating a straight line that connects the right and left wall surfaces and that crosses a perpendicular line passing a position at which the laser scanning apparatus is set up, and calculating a direction orthogonal to the straight line in a horizontal plane, and performing laser scanning of a transverse section of the tunnel while the vertical rotation unit is rotated around a rotation axis in the calculated direction.

## Description

### BACKGROUND OF THE INVENTION

### Technical Field

The present invention relates to a technique of laser scanning.

### Background Art

Tunneling work involves an operation of checking whether the work has been performed as indicated in design drawings. This operation can be conducted by a method using laser scanning. Techniques of performing laser scanning of inner walls of tunnels are publicly known, and some are disclosed in, for example, Japanese Unexamined Patent Application Publication No. 2021-188956 and Japanese Patent No. 5648831.

At a site of tunneling work, an operation for checking a cross-sectional shape of a tunnel is conducted. A method of performing laser scanning on the entire inner wall of a tunnel can be used as a method of obtaining a cross-sectional shape of a tunnel by laser scanning. Unfortunately, this method is time consuming to perform the laser scanning operation, and there is a large amount of data to handle.

### SUMMARY OF THE INVENTION

In view of these circumstances, an object of the present invention is to provide a technique for performing laser scanning along a transverse section of a tunnel while reducing the amount of scanning as much as possible.

The present invention provides a laser scanning data processing device including a processor or circuitry configured to acquire laser scanning data of right and left wall surfaces of a tunnel. The laser scanning data is obtained by a laser scanning apparatus. The processor or circuitry is further configured to calculate, based on the laser scanning data, a straight line that connects the right and left wall surfaces and that crosses a perpendicular line passing a position at which the laser scanning apparatus is set up and to calculate a direction orthogonal to the straight line in a horizontal plane. The straight line is a straight line connecting the right and left wall surfaces at the shortest distance, or a straight line perpendicular to at least one of the right and left wall surfaces.

In an aspect of the present invention, the processor or circuitry may be further configured to calculate the right and left wall surfaces based on the laser scanning data and to calculate the straight line, which connects the right and left wall surfaces and that crosses the perpendicular line passing the position at which the laser scanning apparatus is set up, based on the calculated right and left wall surfaces.

In an aspect of the present invention, the laser scanning apparatus may include a horizontal rotation unit, a vertical rotation unit disposed on the horizontal rotation unit, and an optical unit disposed on the vertical rotation unit and configured to emit and receive laser scanning light. In this case, the laser scanning data may be obtained by laser scanning that is performed while the horizontal rotation unit is rotated in a limited range and the vertical rotation unit is rotated.

In an aspect of the present invention, the laser scanning apparatus may include a horizontal rotation unit, a vertical rotation unit disposed on the horizontal rotation unit, and an optical unit disposed on the vertical rotation unit and configured to emit and receive laser scanning light. In this case, the laser scanning data may include a first laser-scanned point cloud and a second laser-scanned point cloud, and the first and second laser-scanned point clouds may be obtained by laser scanning that is performed while the horizontal rotation unit is rotated in a condition in which an optical axis of the optical unit is fixed in a horizontal direction so as to not move vertically. The first and second laser-scanned point clouds may be linearly distributed along the right and left wall surfaces, respectively. The processor or circuitry may be further configured to calculate a first line that fits to the first laser-scanned point cloud and a second line that fits to the second laser-scanned point cloud, and to calculate a straight line connecting the first line and the second line at the shortest distance, or a straight line perpendicular to at least one of the first line and the second line, as the straight line "A."

In an aspect of the present invention, the laser scanning apparatus may include a horizontal rotation unit, a vertical rotation unit disposed on the horizontal rotation unit, and an optical unit disposed on the vertical rotation unit and configured to emit and receive laser scanning light. In this case, the laser scanning data may include a first laser-scanned point cloud, and the first laser-scanned point cloud may be obtained by laser scanning that is performed while the horizontal rotation unit is rotated in a condition in which an optical axis of the optical unit is fixed in a horizontal direction so as to not move vertically. The first laser-scanned point cloud may be linearly distributed along one of the right and left wall surfaces. The processor or circuitry may be further configured to calculate a first line that fits to the first laser-scanned point cloud and to calculate a straight line perpendicular to the first line, as the straight line "A."

The present invention also provides a laser scanning method for performing laser scanning in a tunnel by using a laser scanning apparatus. The laser scanning apparatus includes a horizontal rotation unit, a vertical rotation unit disposed on the horizontal rotation unit, and an optical unit disposed on the vertical rotation unit and configured to emit and receive laser scanning light. The method includes obtaining laser scanning data of right and left wall surfaces of the tunnel, and calculating, based on the laser scanning data, a straight line that connects the right and left wall surfaces and that crosses a perpendicular line passing a position at which the laser scanning apparatus is set up. The method also includes calculating a direction orthogonal to the straight line in a horizontal plane, and performing laser scanning of a transverse section of the tunnel while the vertical rotation unit is rotated around a rotation axis in the calculated direction. The straight line is a straight line connecting the right and left wall surfaces at the shortest distance or a straight line perpendicular to at least one of the right and left wall surfaces.

The present invention also provides a non-transitory computer recording medium storing computer executable instructions to, when read and executed by a computer processor, cause the computer processor to acquire laser scanning data of right and left wall surfaces of a tunnel. The laser scanning data is obtained by a laser scanning apparatus. The computer processor also performs calculating, based on the laser scanning data, a straight line that connects the right and left wall surfaces and that crosses a perpendicular line passing a position at which the laser scanning apparatus is set up, and calculating a direction orthogonal to the straight line in a horizontal plane. The straight line is a straight line connecting the right and left wall surfaces at the shortest distance or a straight line perpendicular to at least one of the right and left wall surfaces.

The present invention enables providing a technique of performing laser scanning along a transverse section of a tunnel while the amount of scanning is reduced as much as possible.

### BRIEF DESCRIPTION OF DRAWINGS

Fig. 1 is a conceptual diagram showing a principle of the present invention.
Fig. 2 is a conceptual diagram showing the principle of the present invention.
Fig. 3 is a conceptual diagram showing the principle of the present invention.
Fig. 4 shows an external appearance of a laser scanning apparatus.
Fig. 5 shows block diagrams of the laser scanning apparatus and a data processing device.
Fig. 6 is a flowchart showing an example of a processing procedure.

### PREFERRED EMBODIMENTS OF THE INVENTION

### 1. First Embodiment

### Overview

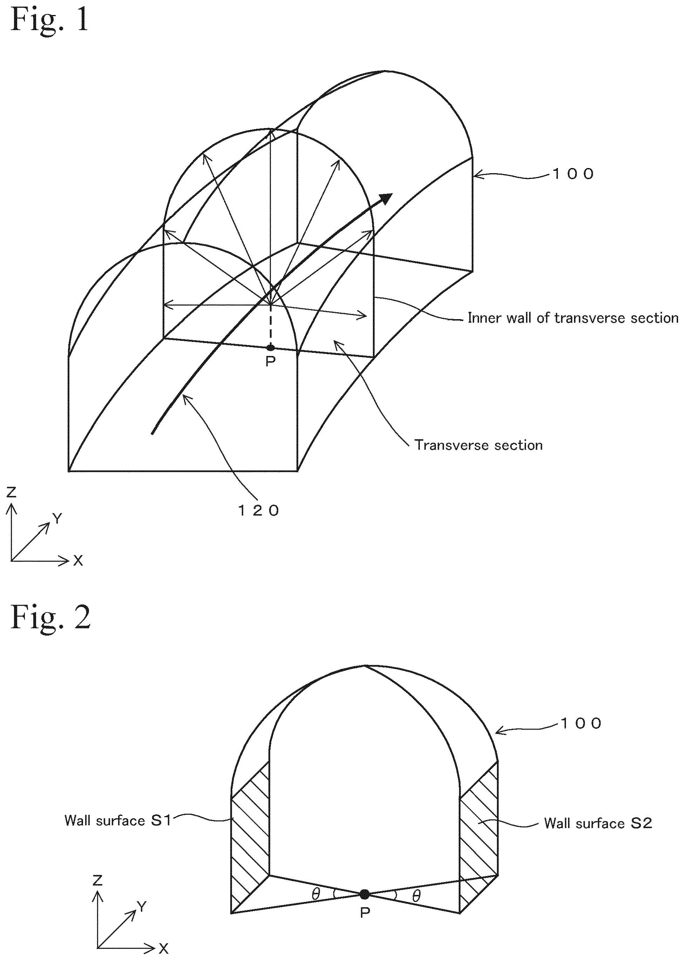

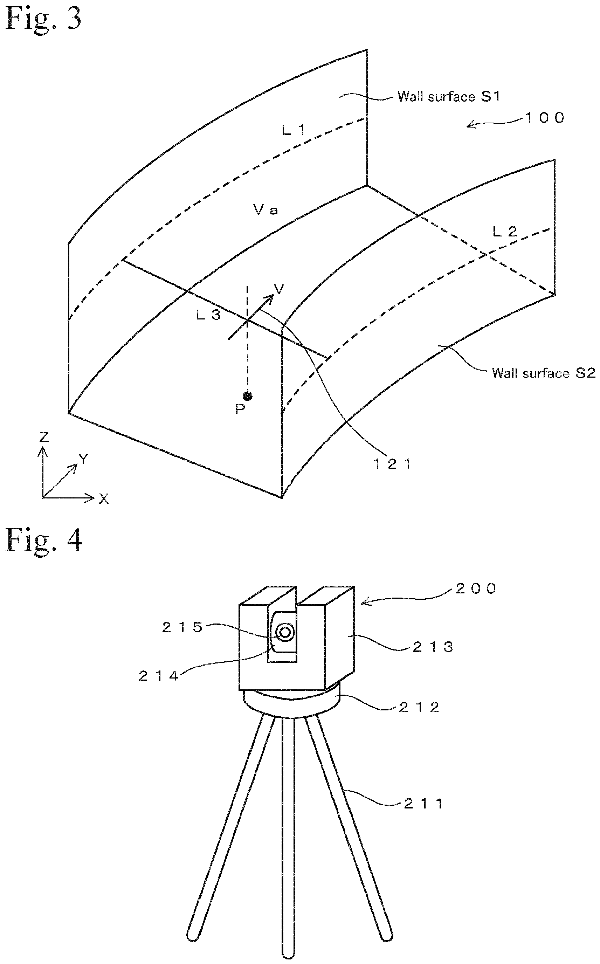

Herein, it is assumed that laser scanning is performed along a transverse section of on a tunnel 100 by using a laser scanning apparatus 200 (refer to Fig. 4), which is set up at a point "P" in Fig. 1. The point "P" corresponds to an instrument point of a surveying apparatus, and in this embodiment, it is an optical origin (an origin for distance measurement and direction measurement) of the laser scanning apparatus 200, or a point on a set-up surface, which is obtained by extending a perpendicular line from the optical origin to the set-up surface. Figs. 1 to 3 show a point "P" that is determined on a set-up surface by extending a perpendicular line from the optical origin of the laser scanning apparatus 200 to the set-up surface (road surface of the tunnel 100).

First, a transverse section of a tunnel is defined. The transverse section of a tunnel is defined as a cross section orthogonal to an axis line direction of the tunnel. The axis line of the tunnel is a line showing an axis of the tunnel and is elongated in a direction the tunnel extends. A tunnel which extends straight has an axis line formed of a straight line.

Fig. 1 shows a tunnel 100 that slightly curves. In this case, an axis line 120 of the tunnel 100 is a curved line. The direction of the axis line 120 of the tunnel 100 at a certain position is a direction of a tangent line of the axis line 120 thereat. In one case in which the tunnel 100 is sloped in the extending direction (in the case of a road, the road is a sloped road), the axis line tilts in a vertical direction. In this case, a component in a horizontal direction of this axis line is presumed as a direction of the axis line of the tunnel.

In order to obtain laser scanning data along a transverse section of the tunnel 100 at the point "P," a direction of a tangent line of the axis line 120 at the point "P" is obtained, and laser scanning is performed in a direction orthogonal to this direction. This provides laser-scanned point clouds of an inner wall of the tunnel, which are taken along the transverse section. For example, if the tunnel 100 has a horseshoe shape, laser-scanned point clouds that form a horseshoe shape are obtained.

Herein, the direction of the axis line 120 at the point "P" is obtained by the following method. Fig. 3 is a schematic diagram showing a road surface (bottom surface) and right and left side walls of the tunnel 100 in Fig. 1, except for a ceiling part. As shown in Fig. 3, a straight line L3 crossing a perpendicular line that passes the point "P" and connecting right and left wall surfaces S1 and S2 of the tunnel 100 at the shortest distance, is calculated, and a vector V" orthogonal to this straight line L3 in the horizontal direction is also calculated. The straight line L3 is a straight line along a transverse section.

The direction of the vector "V" is obtained as a direction of the axis line 120 (refer to Fig. 1) at the point "P." After the direction of the axis line 120 is determined, vertical scanning ("V" scanning) is performed in a direction orthogonal to this direction to obtain laser-scanned point clouds along a transverse section of the tunnel 100 at the point "P."

### Structure of Hardware

Fig. 4 shows an external appearance of the laser scanning apparatus (laser scanner) 200. The laser scanning apparatus 200 includes a tripod 211, a base 212 that is fixed on the top of the tripod 211, a horizontal rotation unit 213 that is a rotary body being horizontally rotatable on the base 212, and a vertical rotation unit 214 that is a rotary body being vertically rotatable relative to the horizontal rotation unit 213.

The vertical rotation unit 214 includes an optical unit 215 that emits and receives laser scanning light. The optical unit 215 emits pulses of laser scanning light. The emission of pulses is performed along a direction (plane) orthogonal to a rotation axis (axis extending in the horizontal direction) of the vertical rotation unit 214 while the vertical rotation unit 214 rotates. That is, the optical unit 215 emits pulses of laser scanning light along a vertical angle direction.

Laser scanning is performed on the surrounding area as follows: pulses of laser scanning light are emitted from the optical unit 215 while the horizontal rotation unit 213 is horizontally rotated and that the vertical rotation unit 214 is rotated vertically, and the laser scanning light that is reflected back from a target object is received by the optical unit 215.

In more detail, scanning along a vertical angle direction (scanning in an upper-lower direction) is performed by making the optical unit 215 emit pulses of laser scanning light while the vertical rotation unit 214 is rotated vertically. In addition, the horizontal rotation unit 213 is simultaneously rotated horizontally. Thus, the scanning line (sweep line) along the vertical angle direction moves in such a manner as to slide along the horizontal angle direction. In the case of performing the horizontal rotation at the same time as the vertical rotation, scanning along the vertical angle direction is not perfect along the vertical direction, and it is performed along a line that is slightly oblique. On the condition that the horizontal rotation unit 213 is not rotated, scanning along the vertical angle direction is performed along the vertical direction.

In one case, the vertical rotation unit 214 may be fixed so as to not move vertically, in such a manner that the optical axis of the optical unit 215 is in the horizontal direction. In this state, the optical unit 215 is made to emit pulses of laser scanning light while the horizontal rotation unit 213 is rotated, whereby laser scanning can be performed only in the horizontal direction. In this case, assuming that the range of the rotation angle of the horizontal rotation unit 213 is 360 degrees, horizontal laser scanning is performed on the surrounding area in the range of 360 degrees. In addition, in the state in which the range of the rotation angle of the horizontal rotation unit 213 is limited to a certain angle range, horizontal laser scanning is performed in this horizontal angle range.

Rotation of each of the horizontal rotation unit 213 and the vertical rotation unit 214 is performed by a motor. Each of a horizontal rotation angle of the horizontal rotation unit 213 and a vertical rotation angle of the vertical rotation unit 214 is accurately measured by an encoder.

The laser scanning light is one pulse of distance measuring light. One pulse of the laser scanning light is emitted to a scanning target point that reflects it, and a distance of this point is thereby measured. On the basis of this measured distance value and the direction of emission of the laser scanning light, the position of the scanned point (point that reflects the laser scanning light) is calculated relative to the laser scanning apparatus 200.

In this state, on the condition that exterior orientation parameters (position and attitude) of the laser scanning apparatus 200 in an absolute coordinate system are known, the position of the scanned point in the absolute coordinate system is clarified. The absolute coordinate system is a coordinate system that is used in a map and in a global navigation satellite system (GNSS). The position in the absolute coordinate system is described in terms of, for example, latitude, longitude, and elevation. It is also possible to obtain laser-scanned point clouds in a local coordinate system having an origin at the optical origin of the laser scanning apparatus 200.

In one case, the laser scanning apparatus 200 outputs a laser-scanned point cloud by providing data of a distance and a direction related to each point (each scanned point). In another case, the laser scanning apparatus 200 internally calculates a position of each point in a certain coordinate system, and a three-dimensional coordinate position of each point is output as point cloud data. Data of the laser-scanned point cloud also contains information of luminance of each scanned point (intensity of light that is reflected back from each scanned point).

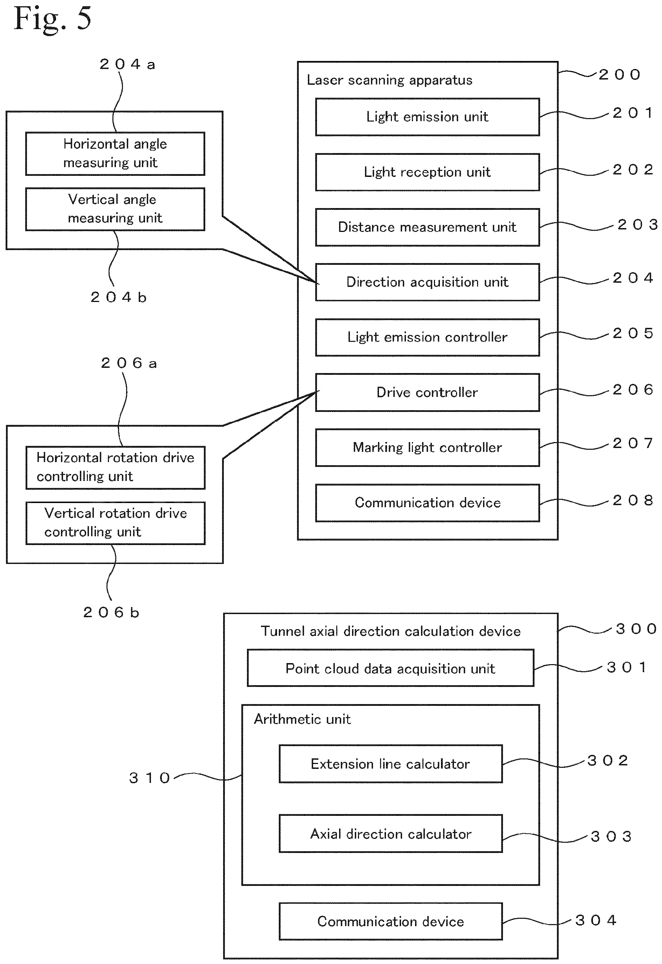

Fig. 5 shows block diagrams of the laser scanning apparatus 200 and a tunnel axial direction calculation device 300. The laser scanning apparatus 200 includes a light emission unit 201, a light reception unit 202, a distance measurement unit 203, a direction acquisition unit 204, a light emission controller 205, a drive controller 206, a marking light controller 207, and a communication device 208.

The light emission unit 201 includes a light emitting element that emits laser scanning light and also includes an optical system and peripheral circuits related to emission of light. The laser scanning light from the light emission unit 201 is emitted to the outside from the optical unit 215 via the optical system. The light reception unit 202 includes a light emitting element that receives laser scanning light and also includes an optical system and peripheral circuits related to reception of light. The laser scanning light that is reflected back is received by the optical unit 215 and is led to the light reception unit 202 via the optical system.

The distance measurement unit 203 calculates a distance from the laser scanning apparatus 200 to a point that reflects laser scanning light. In this example, a reference optical path is provided inside the laser scanning apparatus 200. The laser scanning light is output from the light emitting element and is split into two beams. One beam is emitted from the optical unit 215 to a target object, as laser scanning light, while the other beam is led to the reference optical path as reference light.

The laser scanning light is reflected back from the target object and is received at the optical unit 215, while the reference light propagates in the reference optical path. Then, these two beams are synthesized and then enter the light reception unit 202. The propagation distances of the laser scanning light and the reference light differ from each other, and therefore, the reference light is detected first by the light receiving element, and the laser scanning light is then detected by the light receiving element.

In terms of an output waveform of the light receiving element, a detection waveform of the reference light is output first, and a detection waveform of the laser scanning light is then output after a time interval. The distance to the point that reflects the laser scanning light is calculated from a phase difference (time difference) between the two waveforms. In another case, the distance can also be calculated from time of flight of laser scanning light.

The direction acquisition unit 204 acquires a direction of the optical axis of laser scanning light. The direction of the optical axis is obtained by measuring an angle of the optical axis in the horizontal direction and an angle of the optical axis in the vertical direction. The direction acquisition unit 204 has a horizontal angle measuring unit 204a and a vertical angle measuring unit 204b.

The horizontal angle measuring unit 204a measures a horizontal rotation angle of the horizontal rotation unit 213. The horizontal rotation is rotation around the vertical direction. This angle is measured by an encoder. The vertical angle measuring unit 204b measures a vertical rotation angle of the vertical rotation unit 214. The vertical rotation is rotation around the horizontal direction. This angle is measured by an encoder.

Measuring a horizontal rotation angle of the horizontal rotation unit 213 and a vertical rotation angle of the vertical rotation unit 215 provides a direction of the optical axis of laser scanning light, that is, a direction of a laser-scanned point, as seen from the laser scanning apparatus 200. The light emission controller 205 controls timing of emission of laser scanning light of the light emission unit 201.

The drive controller 206 includes a horizontal rotation drive controlling unit 206a for controlling driving to make the horizontal rotation unit 213 rotate horizontally and a vertical rotation drive controlling unit 206b for controlling driving to make the vertical rotation unit 214 rotate vertically.

The marking light controller 207 controls emission of laser light from the light emission unit 201 to a specified point. This provides a function of a laser pointer. The communication device 208 communicates with the tunnel axial direction calculation device 300 and other devices. This communication is made by using a wireless local area network (LAN) or a mobile phone network.

The tunnel axial direction calculation device 300 is an example of a device of processing point cloud data that is obtained by laser scanning, and it calculates a direction of an axis line of a tunnel at a point in the tunnel.

The tunnel axial direction calculation device 300 is composed of a computer. This computer is, for example, a personal computer (PC), and it includes a central processing unit (CPU), a storage, a user interface, a communication interface, and other functions that are provided to an ordinary PC. A dedicated computer may be prepared as the tunnel axial direction calculation device 300. Alternatively, the tunnel axial direction calculation device 300 may be implemented by a data processing server. It is also possible to incorporate the tunnel axial direction calculation device 300 in the laser scanning apparatus 200.

The tunnel axial direction calculation device 300 includes a point cloud data acquisition unit 301, an extension line calculator 302 for calculating a line extending in a horizontal direction along a wall surface, and an axial direction calculator 303 for calculating an axial direction of a tunnel at a set-up position of the laser scanning apparatus 200. These functional units are implemented by software by making the CPU of the PC to be used execute application programs installed in the PC. One, some, or all of the functional units may be composed of dedicated hardware. The tunnel axial direction calculation device 300 also includes a communication device 304 that uses a communication interface of the PC to be used.

The point cloud data acquisition unit 301 receives and acquires data of laser-scanned point clouds (point cloud data) obtained by the laser scanning apparatus 200.

The extension line calculator 302 and the axial direction calculator 303 constitute an arithmetic unit 310 that calculates an axial direction of the tunnel 100 at a point "P."

The extension line calculator 302 calculates lines L1 and L2 in Fig. 3. Details of this process will be described later.

The axial direction calculator 303 calculates a direction of a vector "V" at a point "P" in Fig. 3. Details of the calculation of the direction of the vector "V" will be described later.

The communication device 304 communicates with the laser scanning apparatus 200 and other devices. This communication is made by using a wireless LAN or a mobile phone network.

### Example of Processing

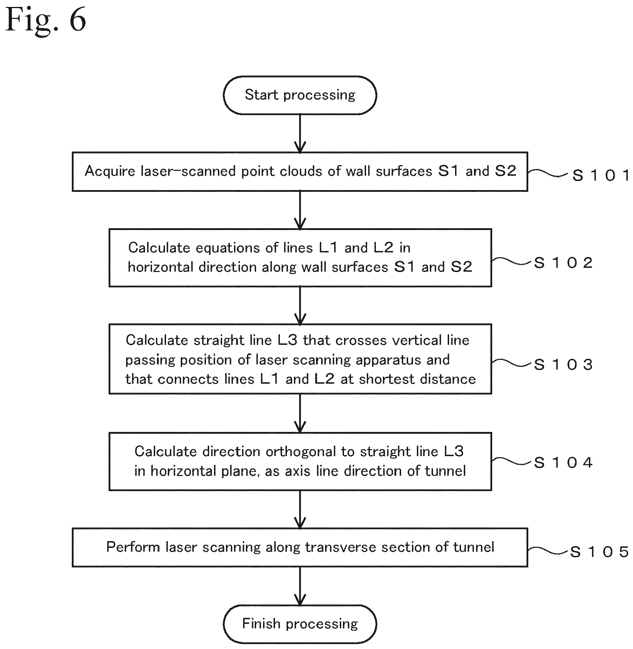

Fig. 6 shows an example of a processing procedure. A program for executing the processing shown in Fig. 6 is stored in the storage of the PC constituting the tunnel axial direction calculation device 300 and is read and executed by the CPU of the PC. It is also possible to store this program in an appropriate storage medium and to read this program for use.

First, the laser scanning apparatus 200 is set up at a point "P." Herein, the position of the point "P" and the position of the optical origin of the laser scanning apparatus 200 are made to coincide with each other in a horizontal surface (X-Y plane). It is also assumed that the laser scanner 200 is horizontally set up at the point "P," but its accurate attitude in the horizontal direction is not known. Nevertheless, an approximate attitude is known by visual observation.

Under these conditions, vertical scanning is performed by vertically rotating the vertical rotation unit 214 while the horizontal rotation unit 213 of the laser scanning apparatus 200 is rotated in a range of plus and minus θ of a horizontal angle around a direction orthogonal to an approximate extension direction of the tunnel 100 (direction of tunnel axis). The angle θ is 5 to 30 degrees.

This laser scanning provides laser-scanned point clouds of the wall surfaces S1 and S2 of the tunnel 100, as shown in Fig. 2 (step S101). The wall surface S1 is a wall surface on a left side as seen from a positive direction of the Y-axis, whereas the wall surface S2 is a wall surface on a right side as seen from the positive direction of the Y-axis. Laser-scanned point clouds of a ceiling surface and a floor surface are not used.

Next, planes that fit to the laser-scanned point clouds of the wall surfaces S1 and S2 are calculated. That is, plane equations of the wall surfaces S1 and S2 are established. These surfaces may not be flat surfaces and may be curved surfaces. Thus, the established plane equations are equations of flat planes or curved planes. After the plane equations of the wall surfaces S1 and S2 are established, a line L1 extending in the horizontal direction along the wall surface S1 and a line L2 extending in the horizontal direction along the wall surface S2 are calculated (step S102). The process in step S102 is performed by the extension line calculator 302. The positions in a Z-direction (height positions) of the lines L1 and L2 are assumed to be the same.

For a tunnel 100 extending straight, the lines L1 and L2 are straight lines. For a tunnel 100 extending along a curve, the lines L1 and L2 are curved lines corresponding to the degree of curve of the tunnel 100.

The lines L1 and L2 can be calculated by another method, in which a line L1 fitting to the laser-scanned point cloud in the horizontal direction of the wall surface S1 and a line L2 fitting to the laser-scanned point cloud in the horizontal direction of the wall surface S2 are calculated. In another case, for example, point clouds in a range that is narrow in an upper-lower direction (e.g., a width of plus and minus 1 cm in the upper-lower direction) at positions presumed to be the same height are extracted, and these ribbon-like areas (linear areas having a certain width) are used as the lines L1 and L2.

After the lines L1 and L2 are calculated, a perpendicular line passing the point "P" is set, and a straight line L3 crossing this perpendicular line and connecting the lines L1 and L2 at the shortest distance is obtained, as shown in Fig. 3 (step S103). A direction orthogonal to this straight line L3 in a horizontal plane is a direction 121 of the axis line 120 of the tunnel 100 at the point "P" (step S104). The processes in steps S103 and S104 are performed by the axial direction calculator 303.

After the direction 121 of the axis line 120 (direction of the vector "V") of the tunnel 100 at the point "P" is obtained, vertical laser scanning in a direction orthogonal to the direction 121 is performed by using the laser scanning apparatus 200 (step S105).

Specifically, first, the horizontal rotation unit 213 is horizontally rotated, and the axial direction of the rotation axis of the vertical rotation unit 214 is oriented in the direction 121. Then, in this state, while the horizontal rotation unit 213 is fixed so as to not move horizontally, laser scanning is performed by rotating the vertical rotation unit 214. That is, laser scanning is performed by rotating the vertical rotation unit 214 around the rotation axis, which is in the direction 121. This provides data of laser-scanned point clouds of a transverse section of the tunnel 100 at the point "P."

### Supplementary Explanation

Hereinafter, an example of a method of selecting a point "P" will be described. First, a position in front of an entrance of the tunnel 100 is accurately positioned. This positioning is performed by positioning using a known reference point or relative positioning using a GNSS. This position is used as a start point P0, and a position P1 in the tunnel 100, which can be seen from the start point P0, is determined. The position P1 is specified in advance in a design drawing. The same applies to positions P2, P3, P4, ... , and Pn, which are subsequent to the position P1.

For example, the function of the laser pointer of the laser scanning apparatus 200 in use is utilized, and a mark is applied at the position P1 by using the laser scanning apparatus 200 set up at the start point P0. Of course, the position P1 may be determined by using another surveying means.

After the position P1 is determined, the laser scanning apparatus 200 is set up at this position, and the processing in Fig. 6 is performed to obtain laser scanning data of a transverse section of the tunnel 100 at this position.

The same procedure is repeatedly performed on the position P2 and the subsequent positions, whereby laser scanning data of a transverse section of the tunnel 100 at the positions P1, P2, P3, P4, ... , and Pn are obtained.

### Advantageous Effects

The laser scanning on each of the wall surfaces S1 and S2 shown in Fig. 2 is partial laser scanning and does not greatly increase the amount of scanning. Thus, it is possible to perform laser scanning along a transverse section of a tunnel while the amount of scanning is reduced as much as possible.

The axial direction of the tunnel can be calculated also in the condition in which the point "P" at which the laser scanner is set up is not at the center in the width direction of the tunnel.

### 2. Second Embodiment

In step S101 in Fig. 6, while the vertical rotation unit 214 of the laser scanning apparatus 200 is fixed in the state of being oriented in the horizontal direction, so as to not move vertically, laser scanning is performed by rotating only the horizontal rotation unit 213. In this case, laser scanning is linearly performed only in the horizontal direction, and laser-scanned point clouds that are linearly distributed are obtained from the wall surfaces S1 and S2. Lines that fit to these linearly distributed laser-scanned point clouds are calculated, whereby the lines L1 and L2 in Fig. 3 are obtained. Other processes are the same as those in the first embodiment. In performing this embodiment, a unit that performs the above-described calculation is prepared as the arithmetic unit 310. The same applies to other embodiments.

Herein, the scanning range of the horizontal angle of the horizontal rotation unit 213 is preferably limited, and for example, it is preferably a range of 60 degrees (plus and minus 30 degrees) or 90 degrees (plus and minus 45 degrees). A specific procedure is as follows. First, the optical axis of the laser scanning apparatus 200 is directed to the wall surface. At this time, the direction of the optical axis is made to be as perpendicular as possible to the wall surface S1 or S2 by visual observation or other suitable method. In this state, horizontal scanning is performed in a range of plus and minus 30 degrees, or the like. This process reduces unnecessary scanning and also decreases the amount of data.

### 3. Third Embodiment

The wall surfaces S1 and S2 may be calculated by rotating the horizontal rotation unit 213 in the condition in which the vertical rotation unit 214 is fixed at each angle so as to not move vertically. In one example, laser scanning is performed three times by rotating the horizontal rotation unit 213 while the vertical rotation unit 214 is fixed so as to not move vertically. That is, first laser scanning is performed while the optical unit 215 is directed at an elevation angle of 0 degrees (in the horizontal direction), second laser scanning is performed while the optical unit 215 is directed at an elevation angle of 10 degrees, and third laser scanning is performed while the optical unit 215 is directed at an elevation angle of 20 degrees.

Thus, three beams of horizontal scanning are performed on the wall surface, and three lines of laser-scanned point clouds are obtained. A plane that fits to these three lines of laser-scanned point clouds is calculated, whereby an equation of a plane of each of the wall surfaces S1 and S2 is calculated. A trace on the wall surface of the laser-scanned point cloud, which is obtained by horizontal scanning as described above, except for the horizontal scanning at the elevation angle of 0 degrees, is not a straight line.

The selection of the vertical angles (in the above-described case, the elevation angles) is not limited to the above-described three angles and may be two angles or be four or more angles. In addition, the intervals between the selected angles are not limited to the above-described each 10 degrees, and instead, each 5 degrees or each 15 degrees can be selected.

This method reduces the amount of laser scanning data. Also, in this case, it is possible to reduce unnecessary scanning and the amount of data by limiting the scanning range of the horizontal angle of the horizontal rotation unit 213.

In a modification example of the above-described laser scanning only in the horizontal direction, horizontal scanning is performed on only one of the wall surfaces S1 and S2, and only one of the lines L1 and L2 is obtained. In this case, a straight line L3 being orthogonal to the line L1 or L2 in the horizontal direction and passing a vertical upper side of the point "P" (crossing the perpendicular line passing the point "P") is calculated.

### 4. Fourth Embodiment

In step S103, the straight line L3 can be calculated as a line being orthogonal to the line L1 and/or the line L2 in the horizontal direction and crossing the perpendicular line passing the point "P."

### 5. Fifth Embodiment

The straight line L3 can be calculated as a line being perpendicular (orthogonal) to at least one of the wall surfaces S1 and S2 in the horizontal direction and crossing the perpendicular line passing the point "P."

### 6. Sixth Embodiment

In a simple method, a cross-sectional direction at a certain place is determined from design data, and laser scanning is performed in this direction. In this case, initially, first laser scanning is performed by using the method described in relation to other embodiment. It is assumed that the laser scanner 200 is set up at the point "P."

Then, point cloud data that is obtained by the first laser scanning and 3D data of a design drawing of the tunnel 100 are compared with each other, and a part to which the point cloud data fits, in the design data, is searched for. This search is performed by using the position of the point "P" in the design data and data of the axial direction of the tunnel 100, which is obtained by the method described in relation to other embodiments.

After drawing data that fits the point cloud data is obtained, an attitude of the laser scanning apparatus 200 relative to the tunnel 100 is calculated by a method of resection using this drawing data. At this time, the point "P" can be determined, but the point "P" is specified in the design data beforehand and is therefore already known.

Next, a direction of the cross section of the tunnel 100 at the point "P" is obtained from the design data, and laser scanning is performed in this direction. This provides laser scanning data of the transverse section of the tunnel 100 at the point "P."

### 7. Seventh Embodiment

The laser scanning apparatus 200 may have a vertical rotation axis that is slightly oblique, which may cause vertical scanning to be tilted relative to a vertical plane. This tilt is measured in the process of final adjustment at the time of factory shipment of the laser scanning apparatus, and the effects thereof are corrected at the time of calculation of laser-scanned point clouds.

This correction is performed on obtained point cloud data and is not appropriate for a case in which an accurate scanning of a transverse section of a tunnel is desired.

From this point of view, the effects of the tilt are reduced by slightly obliquely setting up the laser scanning apparatus 200 based on the data of the tilt obtained in advance, so as to remove the tilt.

In one example, the rotation axis of the vertical rotation unit 214 is not perfectly horizontal to the horizontal rotation unit 213 and tilts from the horizontal direction by 0.05 degrees in a certain direction. In this case, the laser scanning apparatus 200 is obliquely set up by 0.05 degrees in a direction opposite to the certain direction so as to remove the tilt, and the tilt from the horizontal direction of the rotation axis of the vertical rotation unit 214 is made as close to 0 degrees as possible.

Normally, the base 212 is provided with a leveling mechanism for finely adjusting the attitude, and it is possible to finely adjust the tilt of the whole laser scanning apparatus 200. The tilt of the rotation axis of the vertical rotation unit 214 is adjusted by using this adjustment mechanism.

## Claims

1. A laser scanning data processing device comprising a processor or circuitry configured to:
acquire laser scanning data of right and left wall surfaces of a tunnel, the laser scanning data being obtained by a laser scanning apparatus;
calculate, based on the laser scanning data, a straight line that connects the right and left wall surfaces and that crosses a perpendicular line passing a position at which the laser scanning apparatus is set up; and
calculate a direction orthogonal to the straight line in a horizontal plane,
the straight line being a straight line connecting the right and left wall surfaces at a shortest distance or a straight line perpendicular to at least one of the right and left wall surfaces.

2. The laser scanning data processing device according to claim 1, wherein the processor or circuitry is further configured to:
calculate the right and left wall surfaces based on the laser scanning data; and
calculate the straight line, which connects the right and left wall surfaces and that crosses the perpendicular line passing the position at which the laser scanning apparatus is set up, based on the calculated right and left wall surfaces.

3. The laser scanning data processing device according to claim 1 or 2, wherein the laser scanning apparatus comprises:
a horizontal rotation unit;
a vertical rotation unit disposed on the horizontal rotation unit; and
an optical unit disposed on the vertical rotation unit and configured to emit and receive laser scanning light,
the laser scanning data being obtained by laser scanning that is performed while the horizontal rotation unit is rotated in a limited range and the vertical rotation unit is rotated.

4. The laser scanning data processing device according to claim 1, wherein the laser scanning apparatus comprises:
a horizontal rotation unit;
a vertical rotation unit disposed on the horizontal rotation unit; and
an optical unit disposed on the vertical rotation unit and configured to emit and receive laser scanning light,
the laser scanning data includes a first laser-scanned point cloud and a second laser-scanned point cloud, the first and second laser-scanned point clouds are obtained by laser scanning that is performed while the horizontal rotation unit is rotated in a condition in which an optical axis of the optical unit is fixed in a horizontal direction so as to not move vertically, the first and second laser-scanned point clouds are linearly distributed along the right and left wall surfaces, respectively, and
the processor or circuitry is further configured to:
calculate a first line that fits to the first laser-scanned point cloud and a second line that fits to the second laser-scanned point cloud; and
calculate a straight line connecting the first line and the second line at a shortest distance or a straight line perpendicular to at least one of the first line and the second line, as the straight line.

5. The laser scanning data processing device according to claim 1, wherein the laser scanning apparatus comprises:
a horizontal rotation unit;
a vertical rotation unit disposed on the horizontal rotation unit; and
an optical unit disposed on the vertical rotation unit and configured to emit and receive laser scanning light,
the laser scanning data includes a first laser-scanned point cloud, the first laser-scanned point cloud is obtained by laser scanning that is performed while the horizontal rotation unit is rotated in a condition in which an optical axis of the optical unit is fixed in a horizontal direction so as to not move vertically, the first laser-scanned point cloud is linearly distributed along one of the right and left wall surfaces,
the processor or circuitry is further configured to:
calculate a first line that fits to the first laser-scanned point cloud; and
calculate a straight line perpendicular to the first line, as the straight line.

6. A laser scanning method for performing laser scanning in a tunnel by using a laser scanning apparatus, the laser scanning apparatus comprising:
a horizontal rotation unit;
a vertical rotation unit disposed on the horizontal rotation unit; and
an optical unit disposed on the vertical rotation unit and configured to emit and receive laser scanning light,
the method comprising:
obtaining laser scanning data of right and left wall surfaces of the tunnel;
calculating, based on the laser scanning data, a straight line that connects the right and left wall surfaces and that crosses a perpendicular line passing a position at which the laser scanning apparatus is set up;
calculating a direction orthogonal to the straight line in a horizontal plane; and
performing laser scanning of a transverse section of the tunnel while the vertical rotation unit is rotated around a rotation axis in the calculated direction,
the straight line being a straight line connecting the right and left wall surfaces at a shortest distance or a straight line perpendicular to at least one of the right and left wall surfaces.

7. A non-transitory computer recording medium storing computer executable instructions to, when read and executed by a computer processor, cause the computer processor to:
acquire laser scanning data of right and left wall surfaces of a tunnel, the laser scanning data being obtained by a laser scanning apparatus;
calculate, based on the laser scanning data, a straight line that connects the right and left wall surfaces and that crosses a perpendicular line passing a position at which the laser scanning apparatus is set up; and
calculate a direction orthogonal to the straight line in a horizontal plane,
the straight line being a straight line connecting the right and left wall surfaces at a shortest distance or a straight line perpendicular to at least one of the right and left wall surfaces.
